# EUROPEAN PATENT SPECIFICATION

(11) **EP 1 560 696 B1**
(45) Date of publication and mention of the grant of the patent: **20.12.2006**
(21) Application number: 03747978.9
(22) Date of filing: 08.09.2003
(51) Int. Cl.: B29C 49/78, B29C 49/80, B29C 49/16, B29C 49/42

(54) **APPARATUS WITH SPECIFICALLY PROVIDED DEVICE FOR AUTOMATIC BURST DETECTION IN BLOW-MOULDED CONTAINERS**
VORRICHTUNG MIT SPEZIELLEM BAUTEIL ZUM AUTOMATISCHEN BESTIMMEN, OB BLASFORMARTIKEL GEBORSTEN SIND
APPAREIL À DISPOSITIF SPECIFIQUEMENT CONCU POUR LA DETECTION AUTOMATIQUE D'ECLATEMENT DANS DES CONTENANTS MOULÉS PAR SOUFFLAGE

(30) Priority: 15.11.2002 IT PN20020089
(43) Date of publication of application: 10.08.2005
(73) Proprietor: SIPA S.p.A., I-31029 Vittorio Veneto (IT)
(72) Inventor: VENDRAMELLI, Ottorino, I-31020 San Vendemiano (IT); ZOPPAS, Matteo, I-33074 Fontanafredda, Pordenone (IT)
(74) Representative: Giugni, Valter
(86) International application number: PCT/EP2003/009926
(87) International publication number: WO 2004/045832

(56) References cited:
- PATENT ABSTRACTS OF JAPAN vol. 016, no. 262 (M-1265), 15 June 1992 (1992-06-15) & JP 04 064411 A (ISHIKAWAJIMA HARIMA HEAVY IND CO LTD;OTHERS: 01), 28 February 1992 (1992-02-28)
- PATENT ABSTRACTS OF JAPAN vol. 1995, no. 02, 31 March 1995 (1995-03-31) & JP 06 312448 A (SHOWA DENKO KK), 8 November 1994 (1994-11-08)
- PATENT ABSTRACTS OF JAPAN vol. 018, no. 585 (M-1700), 9 November 1994 (1994-11-09) & JP 06 218800 A (UBE IND LTD), 9 August 1994 (1994-08-09)

## Description

The present invention refers to an apparatus and a method for the production of hollow plastic articles, or plastic containers, in particular bottles, in which use is made of a specifically provided device adapted to identify bottles that have possibly been blow-moulded in a faulty manner and must therefore be rejected.

Although reference will be made in the following description, mainly for reasons of greater descriptive convenience, to an apparatus for blow moulding bottles of plastic material, it will be appreciated that the present invention shall be understood as applying also to other kinds of plants and processes, as far as these fall within the scope of the appended claims.

Largely known in the art are plants and methods for blow moulding plastic bottles that are obtained by filling with gas under pressure appropriately heated plastic semi-processed elements, which are generally known by their technical name of "parisons" or "preforms" in the art.

Plants of such a kind are for instance described in the European patent publication no. EP 0 768 165 A1 of this same Applicant, as well as in the various patent publications cited therein.

It is rather largely known in the art that, during the preform blow-moulding process, the possibility is quite often given that, owing to a number of most varied reasons, which on the other hand shall not be discussed here owing to them not having any relevance to the present invention, some production irregularities or disturbances may occur to such an extent as to cause some preforms, in a random sequence thereof, to expand in an incorrect manner, although blow-moulded regularly, up to the point that they may even burst either before reaching their final shape or immediately thereafter, while they still dwell inside the blow-moulding die.

Furthermore, the possibility also arises that the same preforms turn out to be already cracked and/or defective even before that the actual blow-moulding process takes place, so that it is practically impossible for the same preforms to be blown, even partially, to the final shape thereof.

When such an event occurs, the blow-moulding plant goes on operating, but the bottles that have so burst and, therefore, failed to be completed correctly continue to be transported, although in their form of fully useless rejects, on the subsequently provided conveyance line together with the correctly produced bottles and, again together with said correctly produced bottles, they are eventually collected in appropriate storage bins or similar containers before being sent to final utilization.

As far as this particular step is concerned, the need therefore arises for either manual or mechanical and partly automated means to be provided to identify possible faulty bottles and remove them from the conveying, collecting and storage means as described above.

Such an operation does of course not fail to generate corresponding production costs and charges, which are quite frequently fully unacceptable in an industrial environment that is subject to a high extent of pressure in terms of manufacturing competition. It anyway introduces a complication in the manufacturing process, since it necessarily implies an addition of auxiliary operations that must be carried out by appropriate operators, usually on an off-line basis.

In an attempt to find a remedy for such a situation, the patent publication n. EP 1 268 163, filed by this same Applicant with the title "BLOW-MOULDING PLANT WITH APPARATUS FOR AUTOMATIC BURST DETECTION IN BLOW-MOULDED CONTAINERS", describes an apparatus and a method for identifying bottles which have failed, i.e. burst during the blow-moulding process.

For greater convenience, simplicity and brevity in this description, direct reference should therefore be made to such a document for a better insight in the disclosure thereof.

Briefly, anyway, such a document discloses a blow-moulding apparatus that comprises, further to the usual elements and components, a specially provided acoustical/electric transducer arrangement adapted to detect the noise issued outside by the individual moulds, and convert such a noise into an electric signal; there are provided means that process this signal and compare it with a reference signal; provided are also means that, on the basis of the result of such a comparison, identify burst or failed containers, as well as means that are adapted to automatically and selectively exclude said burst or failed containers from the production line.

The apparatus described in the above-mentioned patent application has turned out as being actually capable of being implemented without any practical difficulty at all, as well as quite effective in blow-moulding bottles. However, practical experience on the production floor has caused some drawbacks to come to light, which for the matter are still being experienced with such a kind of apparatus:
- a first drawback lies actually in the marked noisiness of the whole plant; as a matter of fact, these plants, especially when they are single-stage plants and, above all, when they are installed in an environment that includes other noisy industrial plants, are subject to a continuous, high-intensity acoustic stress from both the noise falling upon them from the outside and the noise that they generate themselves.

It has been found that, unacceptably too often, such a high noise level, which these plants are exposed to, can disguise the noise generated by a bursting preform (owing to the need for the intensity of the reference signal to be increased correspondingly), so that it fails to be detected and, as a result, the resulting defective product fails to be promptly removed from the production line, thereby making the detection arrangement of the described invention partially ineffective;
- a second drawback is connected with the circumstance that the preform that reaches the blow-moulding station for being blown into the final product, is itself defective or damaged, thereby showing cracks that, however small they may also be, prevent the same preform from being blown into its final bottle shape due to the blowing gas leaking therethrough.

In this case, i.e. in the event of such failed blow-moulding operations due to already existing leaks in the preform, not even the typical noise generated by a bursting preform is actually generated, so that it is not possible for either the presence of a production reject to be identified or, even less, the same production reject to be removed from the regular production flow.

In view of trying to find a remedy for these problems through the use of means for the detection of the pressure differences occurring whenever a preform being blow-moulded bursts, or in the event of a cracked preform failing to be blow-moulded, the solution has been considered of using suitable pressure detectors adapted to measure the pressure of the gas in the flow path followed by it when flowing into the container being blow-moulded. It has however been found that, when the bottles are being blow-moulded individually in a sequence, the pressure detector arrangement to be used must in that case be capable of withstanding very high pressures, up to approximately 40 bar, and at the same time measuring abrupt and marked pressure drops.

This is actually achievable with the use of industrial component parts that are currently available on the market; however, if the preforms, instead of bursting when being blown, are defective, i.e. cracked since the beginning, the reduction in pressure that takes place in this case may be so small as to fail to be either detected at all, or detected regularly and unfailingly each time, by a pressure detector arrangement that has been provided in view of being capable of operating at far higher pressures or detecting total pressure drops. On the contrary, in the most usual and common case that a plurality of preforms are blow-moulded simultaneously from a single source supplying gas under pressure (i.e. the so-called in-line blow-moulding process), the pressure detector arrangement to be used must be capable of withstanding modest pressure variations taking place very rapidly; further to the difficulty encountered in finding out such a suitable type of pressure detectors, the need also arises in this case for the fact to be considered that a pressure variation as measured in the gas supply conduit can be indicative of a blow-moulding die operating in an irregular manner, but fails to identify which mould is actually concerned.

From JP 04064411A a method of controlling the shape of a parison during the blowing stage is known; said method is based on measuring the diameter of the parison and checking that said diameter to be kept in prescribed dimensions.
However, said method should require the use of proper diameter detectors integrated with the blowing mould, and this fact turns out the method to be fully ineffective as it may happen that the preform suffers a gas leakage and still shows the relevant sizes still within the prescribed limits.
Moreover the assembly detectors of the preform diameters, integrated with the blowing moulds appears strongly expensive and unreliable, both in the construction and especially during operation.

It therefore is desirable, and it is actually a main object of the present invention, to provide an apparatus and a respective method that are capable of performing an automatic preform blow-moulding process and, at the same time, are provided with means that are capable of identifying in a substantially immediate manner those dies in which a preform is possibly blown to bursting, and keeping track of any so resulting reject so as to be able to put apart, in a fully automatic manner at an appropriate station through which said faulty preforms are due to pass, all such faultily blow-moulded preforms in the state of rejects.

In addition, said means must be capable of working without any limitation at all in a highly noisy environment and, at the same time, must also be capable of identifying those failed blow-moulding operations that substantially occur without generating any particular noise signals, such as in the case of already cracked preforms.

Such an apparatus and related method shall furthermore be reliable, fully efficient and operatively effective, as well as capable of being implemented through the use of readily available techniques and materials.

According to the present invention, these and further aims are reached in an apparatus and a method that are made and operate with the characteristics as recited in the appended claims.

The present invention may be implemented in the form of a preferred embodiment that is described and illustrated in detail below by way of non-limiting example with reference to the accompanying drawings, in which:

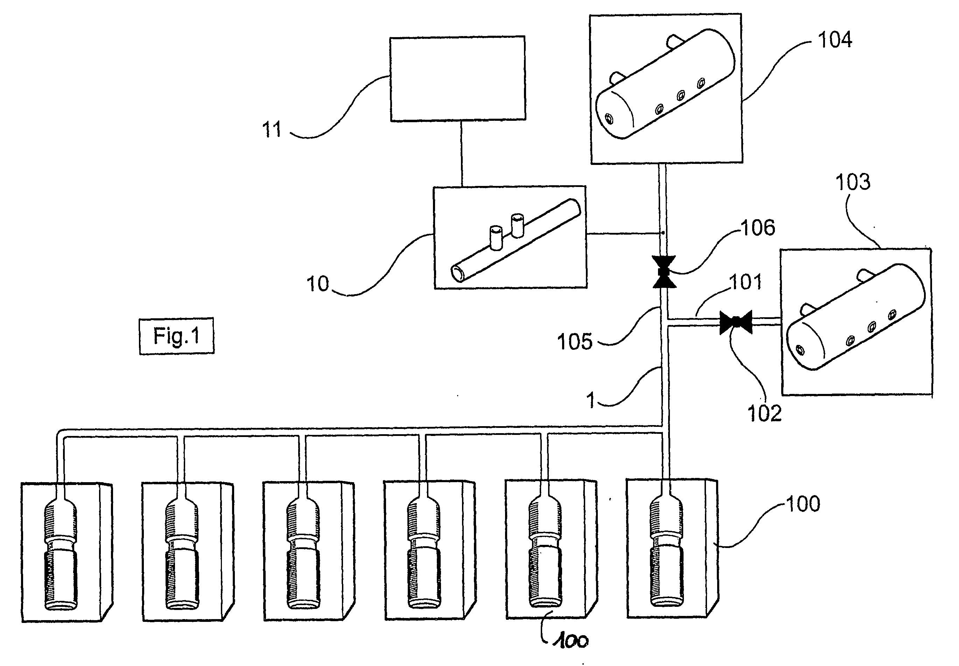

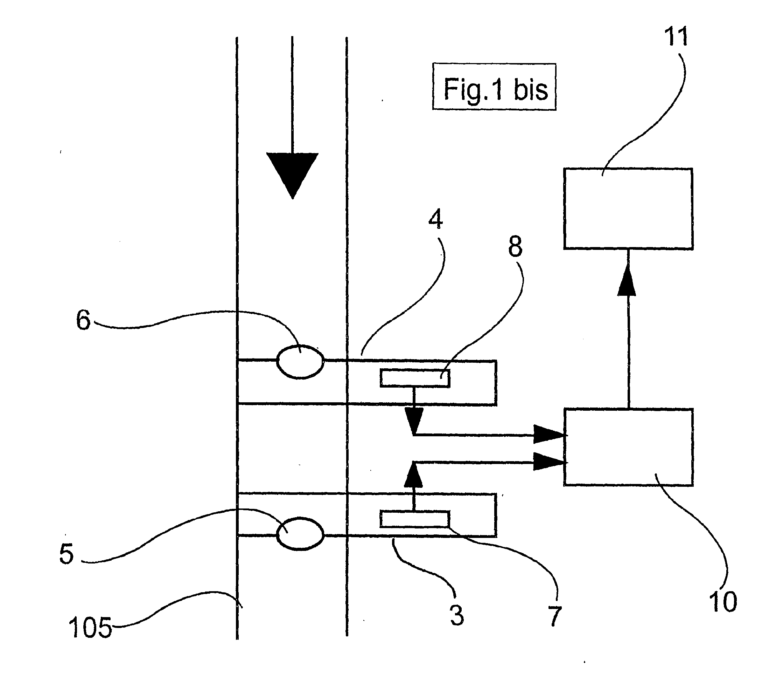

- Figure 1 is a purely schematic view of an apparatus according to the present invention;
- Figure 1BIS is an enlarged, symbolical view of a section of the apparatus shown in Figure 1;
- Figure 2 is a diagrammatical view of the course of the internal pressure in a bottle during a regularly performed and occurring blow-moulding operation;
- Figure 3 is a diagrammatical view of a typical course of the differential pressure as detected during a blow-moulding operation in an apparatus of the kind illustrated in Figure 1, with a positive result of the same blow-moulding operation;
- Figure 4 is a diagrammatical view of the course of the differential pressure as detected during and after a blow-moulding operation in a same apparatus, in which the bottle being blown has burst;
- Figure 5 is a view of a first variant of the apparatus shown in Figure 1;
- Figure 6 is a view of a second improved variant of the apparatus shown in Figure 1;
- Figures 7 and 8 are diagrammatical views of the course of the differential pressure in the case of faulty preforms, in a situation similar to the one considered in Figure 4, but with an expanded pressure scale.

The present invention is essentially based on the observation that when, during the blow moulding of a preform, the latter undergoes tearing or breakage, one of the most immediate consequences of such an occurrence is a clearly perceptible and detectable explosion that is due to the fact that the compressed air inside the preform being so blow-moulded escapes abruptly and violently through the leak so formed in the wall of said preform and causes a corresponding variation in the flow of air or gas being supplied into the preform itself to blow it into its final shape.

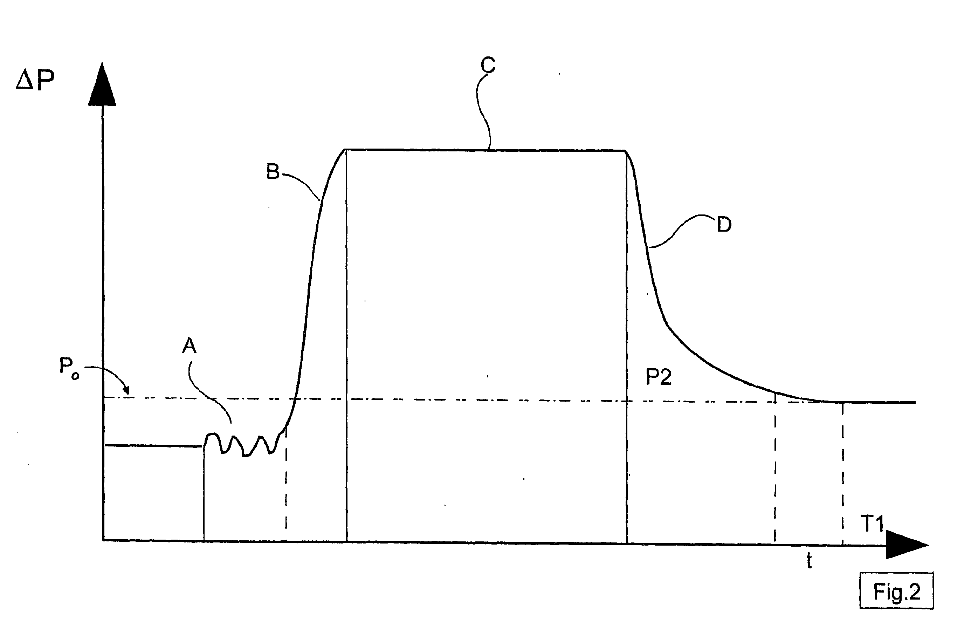

In order to more effectively describe this particular occurrence, reference is made to the illustration in Figure 2, which shows a diagram that has been plotted of the actual course of the pressure inside a preform being blown, or in the conduit of the air being supplied to such a purpose, during a blow-moulding operation performed and taking place in a regular and correct manner. There may be identified four main phases, wherein phase A refers to the preform being filled with gas supplied at low pressure, while almost simultaneously undergoing a stretching action that may take place either just before or just after said low-pressure gas supply is started. This phase therefore implies a significant flow of gas, and the perform is caused to blow up and expand into almost reaching the final shape of the bottle to be produced, while the pressure remains however at a low level.

In the following phase B, gas is let in at a quite high pressure, typically at approximately 40 bar, owing to the fact that the bottle, which at this point is almost moulded to its final shape, must be pressed against the blow-moulding die in view of being able to take its definitive, detailed shape.

Since this phase is carried out at an almost constant volume, the pressure inside the bottle builds up rapidly to reach its almost maximum value, while the flow decreases to the point it reaches almost zero.

In the next phase C, the high pressure inside the bottle is kept for a time as deemed necessary in view of enabling the bottle to stabilize and consolidate its definitive shape. The pressure is kept at its maximum value, while the gas inflow is practically zero (in the assumption that there are no leakages). In the final fourth phase D, the gas contained in the bottle is released therefrom, so that its pressure decreases rapidly to zero (atmospheric value).

It has been observed that, when a bottle turns out to be perforated, cracked or burst, at the end of the phase B and throughout the following phase C, inside the pipe that carries the air at 40 bar there is a substantial flow of gas, and it is actually this flow of gas that has desirably to be measured, since it is the most effective indicator of the existing air or gas leakage.

It has in fact been found that, if the bottle is not perforated, cracked or burst, such a flow of air tends to end up just after a very short time that the high-pressure air valve is opened.

If the bottle is on the contrary perforated, cracked or burst, or anyway there is a leakage indicative of an irregular blow-moulding operation, the high-pressure air flow keeps going on at a certain value, which is certainly detectable and may sometimes be also quite elevated, well beyond the duration of the phase C.

For the magnitude of the flow inside the supply conduit to be able to be determined in an accurate and reproducible manner, the need arises for a device and a related method to be provided, which do not alter pressure losses to any significant extent, are capable of withstanding static pressures of up to approximately 40 bar, and are resistant to the conditions imposed by working cycles that follow each other uninterruptedly within the conduit under turbulent flow conditions.

An apparatus provided with the device according to the present invention is comprised of following component parts (see Figure 1):
- a plurality of dies 100 for blow-moulding preforms,
- a main conduit 1 that carries the air into the cavities of the blow-moulding dies,
- a low-pressure gas supply source 103 connected to said main conduit 1 via a respective first supply channel 101,
- a suitably controlled valve 102 associated to said first supply channel,
- a high-pressure gas supply source 104 connected to said main conduit 1 via a respective second supply channel 105,
- a second suitably controlled valve 106 associated to said second supply channel.

In this example of embodiment, the invention consists in providing said second supply channel 105 with a particular embodiment of a Pitot tube arrangement (which is widely known in the art, so that it shall not be described here any further). It is a largely known fact that such a device is capable of detecting and measuring even very low flow speeds: when a gas flows through the Pitot tube at a certain speed V, a pressure difference builds up across the tubes, on which this Pitot tube arrangement is based, such a pressure difference being proportional to the square of the speeds of the flow.

In this particular case, two small tubes 3, 4 are inserted in said supply channel 105, where they are arranged so as to extend across said channel orthogonally thereto. These tubes must be given as small a size as possible, so as to avoid adding any significant disturbance of the flow to be measured; they must anyway be given a properly calibrated cross-section.

Both these small tubes have a respective bore 5, 6 extending along an axis aligned with the direction of the flow, but oriented in an opposite direction with respect to each other, i.e. the projection of a first bore 5 on a plane orthogonal to the direction of the flow, downstream of the same bore, is not nil, whereas nil is the projection thereof on the plane orthogonal to the direction of the flow, but upstream of the bore.

Exactly the opposite is true as far as the second bore 6 is concerned, as this is illustrated in Figure 1 Bis.

Arranged in each one of said two small tubes there is a suitable pressure sensor 7 and 8, respectively, wherein said sensors are connected to a same differential pressure detector arrangement 10.

With the apparatus configured as defined and described above, a number of experiments have been carried out in order to identify the typical course of the differential pressure and, accordingly, of the speed of the flow of blowing gas, in the two opposite conditions of:
- regular blow-moulding with positive result (no leakage) and
- irregular blow-moulding with negative result (burst or perforation).

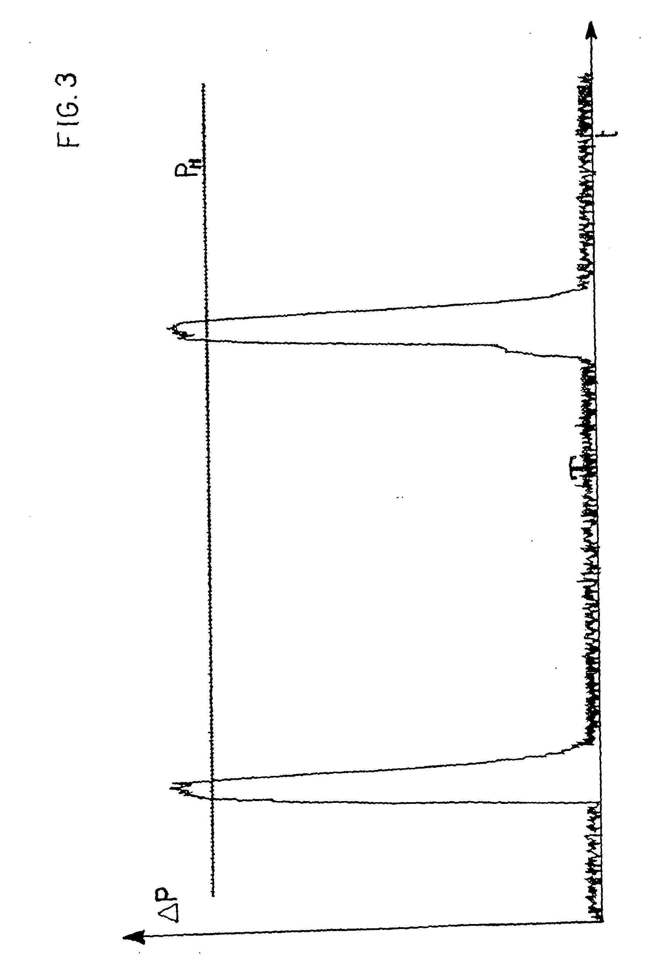

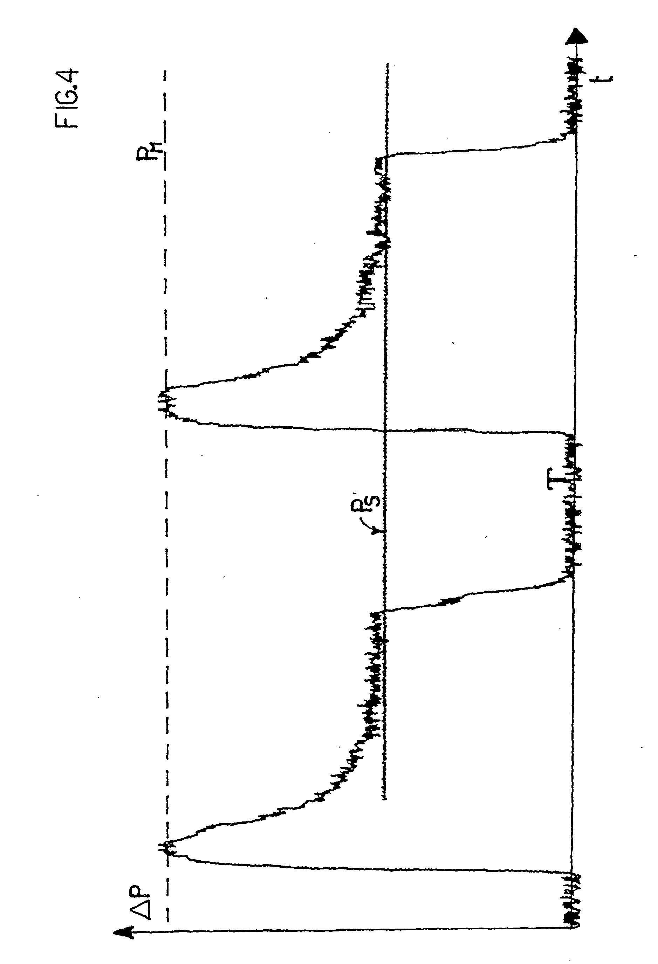

Figure 3 shows in a general manner a typical course of the differential pressure detected during blow moulding in a 16-cavity die, without any bottle bursting or breaking, whereas Figure 4 shows a typical course of the differential pressure as detected during and after a blow-moulding operation in a same apparatus, in which the bottle being blown has burst.

It clearly emerges from the illustration in Figure 3 that the differential pressure plotted on the ordinate, and therefore the flow, increases from an initial value of zero up to a maximum value, and then decreases again to said initial value of zero at the end of the blow-moulding process, and this can only be taken as an indication of a successfully blown bottle, since it is only in this case that the flow decreases progressively to zero during the total filling cycle.

In the opposite case, i.e. when a bottle bursts during blow moulding, as this is best illustrated in Figure 4, the differential pressure, and hence the flow, increases from an initial value of zero up to a maximum value P_{M}, and then decreases again to a value that anyway is higher than zero, i.e. P_{S} > 0, and this can only be taken as an indication of a bottle having burst during blow moulding, or anyway leaking, since it is only in this case that the flow may well decrease during high-pressure gas blowing, but will never reach down to zero.

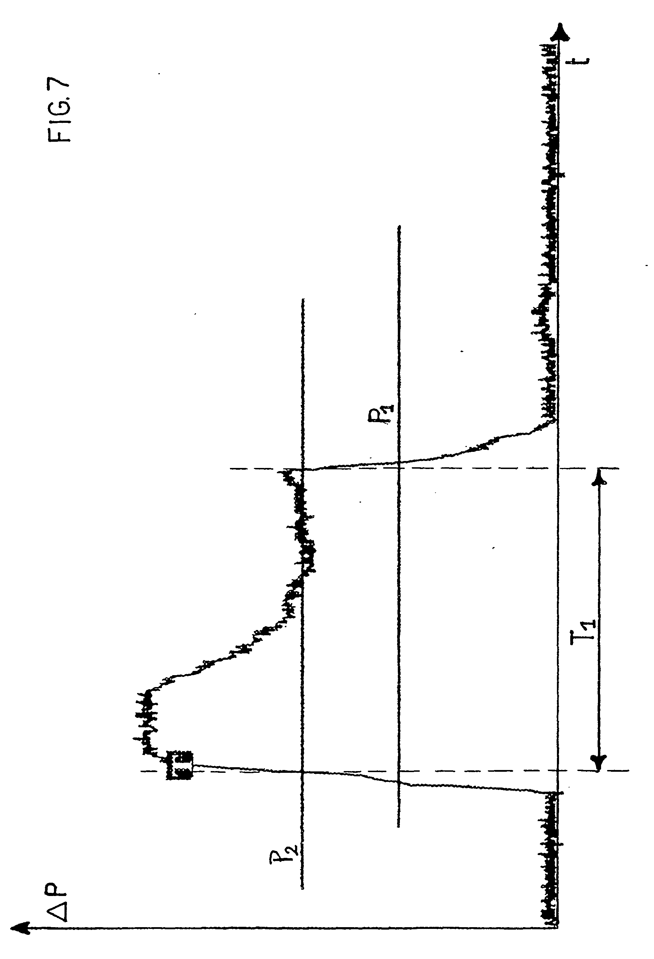

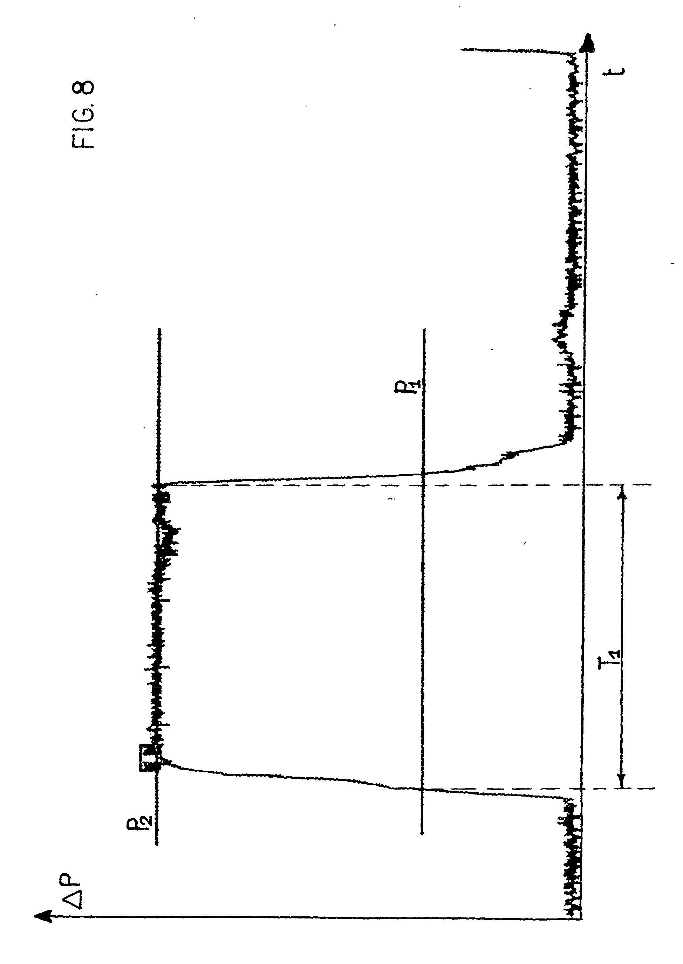

Owing to the rather small-scale representation in Figure 4, in order to be able to take a closer look at and more accurately follow the course of the pressure as detected in some similar cases, in which the bottles have burst during blow moulding, some experiments have been reproduced, the results of which are illustrated in Figures 7 and 8, in which the vertical or pressure scale is expanded. In particular, Figure 7 indicates the course of the typical ΔP of a bottle that, while not burst, is punctured, whereas Figure 8 indicates the typical ΔP of a bottle that has burst.

Going on with the investigation of such phenomena, it has been most clearly observed that, in each one of the cases represented in the above cited Figures, it is possible to identify a positive (i.e. higher than zero) average differential pressure, which is assumed as being the reference differential pressure P1, associated to and persisting over a certain definite period of time T1 after the beginning of the blowing phase; defined is then most suitably also a maximum threshold value P2 of the differential pressure, to which conventionally corresponds a decision whether there is a leakage during blow moulding or not.

When the differential pressure being measured at that definite moment, or even during a pre-established period of time, exceeds said pre-established maximum threshold value of differential pressure P2, it can then be concluded with a reasonable level of confidence that the blow-moulding operation has failed to be completed successfully due to the existence of more or less marked gas leakages or losses.

Going back at this point to Figure IBis, the differential pressure detector arrangement 10 is connected to an appropriate processing means 11, which is capable of receiving the signals coming from said differential pressure detector arrangement 10, measuring the value thereof, receiving and storing reference levels set by the external operator, comparing said values with said reference levels and, based on the outcome of such a comparison, generating appropriate command and control signals to be sent to further actuation means (not shown), which are made and arranged in an appropriate manner so as to be able to exclude, i.e. remove from the production process those bottles which are told to be defective by the outcome of said comparison.

These operations and means for processing electric and electronic signals, as well as comparing and producing control and actuation signals are fully and readily available to and within the capability of all those skilled in the art of industrial automation, so that they shall not be described in any greater detail here.

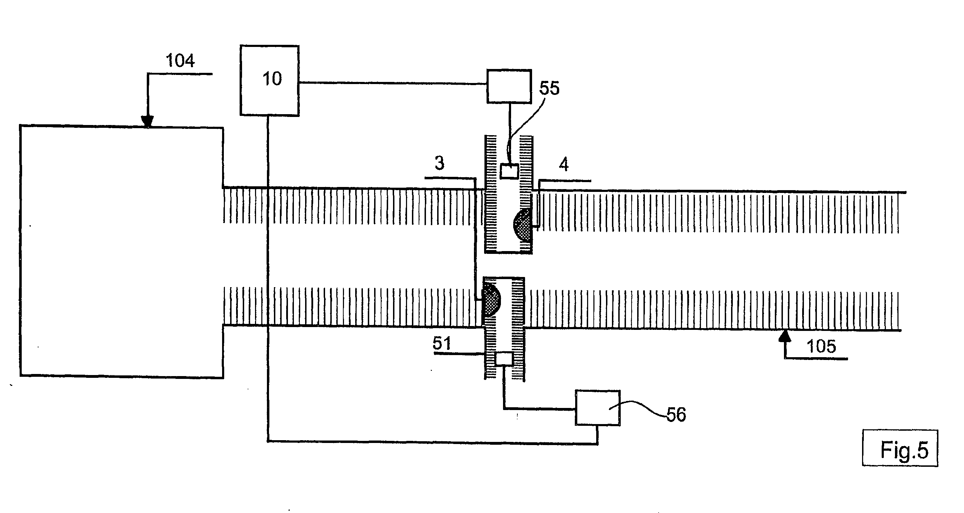

The described invention may furthermore be embodied so as to include following advantageous improvements: with reference to Figure 5, the two tubes 51 and 52, in which there are provided respective ports 53 and 54 with related pressure detectors 55, 56 connected to the differential pressure detector arrangement 10, are substantially positioned in the same section of the high-pressure gas supply channel 105 so as to simplify the construction and perturb the regular flow conditions of the blowing gas in said conduit to an even lesser extent.

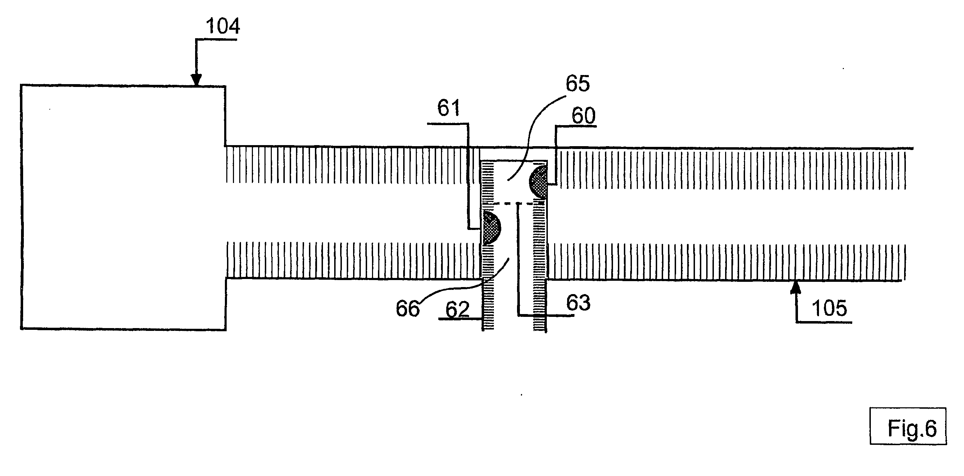

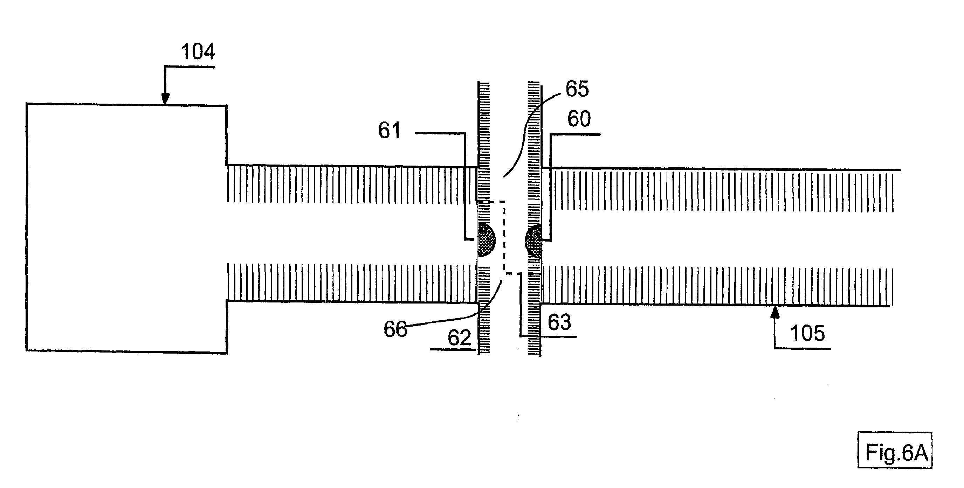

A further improved and simplified embodiment of the present invention is shown in Figure 6, in which the two ports 60 and 61 are provided in a same tube 62 extending across said high-pressure gas supply channel 105. These ports must of course be provided in two chambers that are isolated from each other as far as pressure is concerned; for this reason, inside said same tube 62 there is provided a partition wall 63 that isolates from each other the chambers in which said two ports 60 and 61 and the related pressure detectors (not shown). It will of course be appreciated that said partition wall 63 may be assigned various forms and shapes, as shown also in Figure 6A, without affecting the validity and effectiveness of the present invention.

## Claims

1. Blow moulding apparatus for the production of hollow bodies of plastic material, obtained from respective preforms, comprising:
- at least a blow-moulding die (100) containing a respective plurality of cavities for blow moulding respective preforms,
- a main conduit (1) for supplying gas into the cavities provided inside the blow-moulding die,
- a low-pressure gas supply source (103) connected to said main conduit (1) via a respective first supply channel (101),
- a controlled valve (102) associated to said first supply channel,
- a high-pressure gas supply source (104) connected to said main conduit (1) via a respective second supply channel (105),
- a second suitably controlled valve (106) associated to said second supply channel,
- means for detecting and measuring the presence or absence of a gas flow passing through said second supply channel (105) at a pre-determined moment after the blow-moulding phase has started,
**characterized in that** said means comprise a differential pressure measuring device.

2. Blow moulding apparatus according to claim 1, **characterized in that** said differential pressure measuring device comprises:
- two at least partially hollow tubes (3, 4) arranged so as to extend crosswise across said second supply channel,
- said tubes being positioned in different sections, i.e. one (3) situated at a more downstream location and the other (4) at a more upstream location along the flowpath of said second supply channel (105),
- each such tube being provided with a respective port (5, 6) on a side of the respective surface thereof,
- each one of said ports being associated with a respective pressure sensor (7, 8) for sensing the pressure as measured inside the respective tube.

3. Blow moulding apparatus according to claim 2, **characterized in that** one port (5) is oriented against the direction of flow of the gas flowing in from the high-pressure gas supply source (104), and the other port (6) is oriented in agreement with said gas flow direction, in such a manner that said ports are exposed to at least part of the dynamic pressure and at least part of the dynamic negative pressure entrained by said gas, respectively.

4. Blow moulding apparatus according to claim 3, **characterized in that** said differential pressure measuring device comprises:
- two hollow, mutually aligned tubes (51, 52) arranged so as to extend crosswise across said second supply channel (105), substantially in the same section thereof,
- each such tube being provided with a respective port (53, 54) on a side of the respective surface thereof, said ports being aligned with the direction of flow of said gas, but oriented in a substantially opposite manner,
- each one of said ports being associated with a respective pressure sensor (7, 8) for sensing the pressure as measured inside the respective tube.

5. Blow moulding apparatus according to claim 2, **characterized in that** said differential pressure measuring device comprises:
- a single hollow tube (62) arranged so as to extend crosswise across said second supply channel,
- said tube being provided with two distinct ports (60, 61) in the surface thereof,
- in which a first port (60) is oriented against the direction of flow of the gas flowing in from the high-pressure gas supply source, and the other port (61) is oriented in agreement with said gas flow direction, in such a manner that said ports are exposed to at least part of the dynamic pressure and at least part of the dynamic negative pressure entrained by said gas, respectively.

6. Blow moulding apparatus according to claim 5, **characterized in that** said single transversally arranged tube (62) is closed internally by an appropriate partition wall (63) provided at a location between said first port (60) and said second port (61), in such a manner that in said single tube there are created two distinct chambers (65, 66) opening independently into said second supply channel (105).

7. Blow moulding apparatus according to any of the preceding claims 4 to 6, **characterized in that** said single tube or said two tubes is/are provided with two non-communicating inner cavities, and said differential pressure measuring device (10) comprises two distinct pressure sensors for detecting the pressure within said two cavities.

## Patentansprüche

1. Blasform-Vorrichtung für die Herstellung von hohlen Körpern aus Kunststoffmaterial, erhalten aus jeweiligen Vorformen, die aufweist:
- mindestens eine Blasform (100), die eine jeweilige Mehrzahl von Hohlräumen für ein Blasformen jeweiliger Vorformen enthält,
- einen Hauptkanal (1) zum Zuführen von Gas in die Hohlräume, vorgesehen innerhalb der Blasform,
- eine Niederdruckgasversorgungsquelle (103), verbunden mit dem Hauptkanal (1) über einen jeweiligen ersten Zuführkanal (101),
- ein gesteuertes Ventil (102), zugeordnet zu dem ersten Zuführkanal,
- eine Hochdruckgasversorgungsquelle (104), verbunden mit dem Hauptkanal (1) über einen jeweiligen zweiten Zuführkanal (105),
- ein zweites, geeignet gesteuertes Ventil (106), zugeordnet zu dem zweiten Zuführkanal,
- eine Einrichtung zum Erfassen und Messen des Vorhandenseins oder des Nichtvorhandenseins einer Gasströmung, die durch den zweiten Zuführkanal (105) zu einem vorgegebenen Zeitpunkt, nachdem die Blasform-Phase begonnen hat, hindurchführt,
**dadurch gekennzeichnet, dass** die Einrichtung eine einen differenziellen Druck messende Vorrichtung aufweist.

2. Blasfonn-Vorrichtung nach Anspruch 1, **dadurch gekennzeichnet, dass** die einen differenziellen Druck messende Vorrichtung aufweist:
- mindestens zwei teilweise hohle Rohre (3, 4), angeordnet so, um sich kreuzweise über den zweiten Zuführkanal zu erstrecken,
- wobei die Rohre in unterschiedlichen Abschnitten positioniert sind, d.h. eines (3) ist an einer weiter ausströmseitigen Stelle angeordnet und das andere (4) ist an einer weiter einströmseitigen Stelle entlang des Strömungswegs des zweiten Zuführkanals (105) angeordnet,
- wobei jedes Rohr davon mit einer jeweiligen Öffnung (5, 6) an einer Seite der jeweiligen Oberfläche davon vorgesehen ist,
- wobei jede eine der Öffnungen zu einem jeweiligen Drucksensor (7, 8) zur Erfassung des Drucks, wie er innerhalb des jeweiligen Rohrs gemessen ist, zugeordnet ist.

3. Slasform-Vorrichtung nach Anspruch 2, **dadurch gekennzeichnet, dass** eine Öffnung (5) gegen die Strömungsrichtung des Gases, das von der Hochdruckgasversorgungsquelle (104) aus fließt, orientiert ist, und die andere Öffnung (6) in Übereinstimmung mit der Gasflussrichtung in einer solchen Art und Weise orientiert ist, dass die Öffnungen zumindest einem Teil des dynamischen Drucks und zumindest einem Teil des dynamischen, negativen Drucks, mitgeführt durch das Gas, jeweils, ausgesetzt sind.

4. Blasform-Vorrichtung nach Anspruch 3, **dadurch gekennzeichnet, dass** die einen differenziellen Druck messende Vorrichtung aufweist:
- zwei hohle, zueinander ausgerichtete Rohre (51, 52), angeordnet so, um sich kreuzweise über den zweiten Zuführkanal (105), im Wesentlichen in derselben Richtung davon, zu erstrecken,
- wobei jedes Rohr davon mit einer jeweiligen Öffnung (53, 54) an einer Seite der jeweiligen Oberfläche davon versehen ist, wobei die Öffnungen zu der Strömungsrichtung des Gases ausgerichtet sind, allerdings in einer im Wesentlichen entgegengesetzten Art und Weise orientiert sind,
- wobei jede eine der Öffnungen zu einem jeweiligen Drucksensor (7, 8) zum Erfassen des Drucks, wie er innerhalb des jeweiligen Rohrs gemessen ist, zugeordnet ist.

5. Blasform-Vorrichtung nach Anspruch 2, **dadurch gekennzeichnet, dass** die den differenziellen Druck messende Vorrichtung aufweist:
- ein einzelnes, hohles Rohr (62), angeordnet so, um sich kreuzweise über den zweiten Zuführkanal zu erstrecken,
- wobei das Rohr mit zwei unterschiedlichen Öffnungen (60, 61) in der Oberfläche davon versehen ist,
- wobei eine erste Öffnung (60) gegen die Strömungsrichtung des Gases, das von der Hochdruckgasversorgungsquelle einfließt, orientiert ist und die andere Öffnung (61) in Übereinstimmung mit der Gasflussrichtung orientiert ist, in einer solchen Art und Weise, dass die Öffnungen zumindest teilweise dem dynamischen Druck und zumindest teilweise dem dynamischen, negativen Druck, mitgeführt durch das Gas, jeweils, ausgesetzt sind.

6. Blasform-Vorrichtung nach Anspruch 5, **dadurch gekennzeichnet, dass** das einzelne, quer angeordnete Rohr (62) innen durch eine geeignete Unterteilungswand (63), vorgesehen an einer Stelle zwischen der ersten Öffnung (60) und der zweiten Öffnung (61), in einer solchen Art und Weise vorgesehen ist, dass in dem einzelnen Rohr zwei unterschiedliche Kammern (65, 66), die sich unabhängig in den zweiten Zuführkanal (105) hinein öffnen, erzeugt sind.

7. Blasform-Vorrichtung nach einem der vorhergehenden Ansprüche 4 bis 6, **dadurch gekennzeichnet, dass** das einzelne Rohr oder die zwei Rohre mit zwei nicht miteinander in Verbindung stehenden, inneren Hohlräumen versehen ist/sind, und wobei die den differenziellen Druck messende Vorrichtung (10) zwei unterschiedliche Drucksensoren zum Erfassen des Drucks innerhalb der zwei Hohlräume aufweist.

## Revendications

1. Appareil de moulage par soufflage pour la production de corps creux en matière plastique obtenus à partir de préformes respectives, comprenant :
- au moins une matrice de moulage par soufflage (100) contenant une pluralité respective de cavités pour mouler par soufflage des préformes respectives,
- un conduit principal (1) pour introduire un gaz dans les cavités prévues dans la matrice de moulage par soufflage,
- une source (103) d'alimentation en gaz basse pression reliée audit conduit principal (1) par l'intermédiaire d'un premier canal d'alimentation respectif (101),
- une vanne commandée (102) associée audit premier canal d'alimentation,
- une source (104) d'alimentation en gaz haute pression reliée audit conduit principal (1) par l'intermédiaire d'un deuxième canal d'alimentation respectif (105),
- une deuxième vanne (106) commandée de manière appropriée, associée audit deuxième canal d'alimentation,
- des moyens pour détecter et mesurer la présence ou l'absence d'un écoulement gazeux traversant ledit deuxième canal d'alimentation (105) à un instant prédéterminé après que la phase de moulage par soufflage a débuté,
**caractérisé en ce que** lesdits moyens comprennent un dispositif de mesure de pression différentielle.

2. Appareil de moulage par soufflage selon la revendication 1, **caractérisé en ce que** ledit dispositif de mesure de pression différentielle comprend :
- deux tubes (3, 4) au moins partiellement creux agencés de manière à s'étendre transversalement par rapport audit deuxième canal d'alimentation,
- lesdits tubes étant placés dans différentes sections, c'est-à-dire l'un (3) situé en une position plus en aval et l'autre (4) dans une position plus en amont le long de la trajectoire d'écoulement dudit deuxième canal d'alimentation (105),
- chaque tube étant muni d'un orifice respectif (5, 6) d'un côté de sa surface respective,
- chacun desdits orifices étant associé à un capteur de pression respectif (7, 8) pour détecter la pression mesurée à l'intérieur du tube respectif.

3. Appareil de moulage par soufflage selon la revendication 2, **caractérisé en ce qu'**un orifice (5) est orienté contre la direction d'écoulement du gaz arrivant de la source (104) d'alimentation en gaz haute pression, et l'autre orifice (6) est orienté conformément à ladite direction d'écoulement du gaz, de telle manière que lesdits orifices sont exposés à au moins une partie de la pression dynamique et à au moins une partie de la pression négative dynamique entraînée par ledit gaz, respectivement.

4. Appareil de moulage par soufflage selon la revendication 3, **caractérisé en ce que** ledit dispositif de mesure de pression différentielle comprend :
- deux tubes creux (51, 52) mutuellement alignés, agencés de manière à s'étendre transversalement par rapport audit deuxième canal d'alimentation (105), sensiblement dans la même section de celui-ci,
- chaque tube étant muni d'un orifice respectif (53, 54) sur un côté de sa surface respective, lesdits orifices étant alignés avec la direction d'écoulement dudit gaz, mais orientés d'une manière sensiblement opposée,
- chacun desdits orifices étant associé à un capteur de pression respectif (7, 8) pour détecter la pression mesurée à l'intérieur du tube respectif.

5. Appareil de moulage par soufflage selon la revendication 2, **caractérisé en ce que** ledit dispositif de mesure de pression différentielle comprend :
- un unique tube creux (62) agencé de manière à s'étendre transversalement par rapport audit deuxième canal d'alimentation,
- ledit tube étant muni de deux orifices distincts (60, 61) dans sa surface,
- dans lequel un premier orifice (60) est orienté contre la direction d'écoulement du gaz venant de la source d'alimentation en gaz haute pression, et l'autre orifice (61) est orienté conformément à ladite direction d'écoulement du gaz, de telle manière que les deux orifices sont exposés à au moins une partie de la pression dynamique et à au moins une partie de la pression négative dynamique entraînée par ledit gaz, respectivement.

6. Appareil de moulage par soufflage selon la revendication 5, **caractérisé en ce que** ledit tube unique (62) disposé transversalement est fermé à l'intérieur par une cloison appropriée (63) prévue en une position située entre ledit premier orifice (60) et ledit deuxième orifice (61), de telle manière que, dans ledit tube unique, sont créées deux chambres distinctes (65, 66) s'ouvrant indépendamment dans ledit deuxième canal d'alimentation (105).

7. Appareil de moulage par soufflage selon l'une quelconque des revendications précédentes 4 à 6, **caractérisé en ce que** ledit tube unique ou lesdits deux tubes est/sont muni(s) de deux cavités intérieures non communicantes, et ledit dispositif (10) de mesure de pression différentielle comprend deux capteurs de pression distincts pour détecter la pression dans lesdites deux cavités.
